# EUROPÄISCHE PATENTSCHRIFT

(11) **EP 2 803 531 B1**
(45) Veröffentlichungstag und Bekanntmachung des Hinweises auf die Patenterteilung: **20.04.2022**
(21) Anmeldenummer: 14167179.2
(22) Anmeldetag: 06.05.2014
(51) Int. Cl.: B60Q 3/54, B60Q 3/62, B60Q 3/64, G02B 6/00

(54) **Flächige Vorrichtung zur Beleuchtung der Innenausstattung eines Fahrzeugs**
Laminar device for illuminating the interior of a vehicle
Dispositif plat destiné à éclairer l'équipement intérieur d'un véhicule

(30) Priorität: 17.05.2013 DE 102013008433
(43) Veröffentlichungstag der Anmeldung: 19.11.2014
(73) Patentinhaber: Lisa Dräxlmaier GmbH, 84137 Vilsbiburg (DE)
(72) Erfinder: Bayersdorfer, Bernhard, 84171 Baierbach (DE)

(56) Entgegenhaltungen:
- EP-A1- 1 715 244
- EP-A1- 2 028 046
- FR-A1- 2 912 095
- GB-A- 2 489 813
- US-A- 3 491 245
- US-A- 4 277 817
- US-A1- 2007 019 425

## Beschreibung

### TECHNISCHES GEBIET

Die Erfindung betrifft eine flächige Vorrichtung zur Beleuchtung einer Baugruppe, die in der Innenausstattung eines Fahrzeugs verbaut wird. Solche Vorrichtungen werden insbesondere in Fahrzeugen im Automobilbereich, in der Luftfahrt, im schienengebundenen Transport und in der Schifffahrt benötigt.

### HINTERGRUND DER ERFINDUNG

Es ist zum Beispiel aus der DE 10 2012 215 801 bekannt, Fahrzeuginnenräume mit Lichtleitern auszuleuchten. Der Lichtleiter dient hierbei entweder zur Erzeugung sichtbarer Lichtlinien oder einer indirekten Beleuchtung, die auch als Ambientebeleuchtung bezeichnet wird. Die Beleuchtung soll sehr gezielt an vorgegebenen Stellen erfolgen und keine Helligkeitsschwankungen aufweisen.

Das Prinzip der Lichtleitung in diesen Lichtleitern beruht auf einer Reflexion an der Grenzschicht zwischen Lichtleiter und Umgebung. Hat der Lichtleiter einen Brechungsindex von zum Beispiel 1,5 und ist von Luft mit einem Brechungsindex von 1,0 umgeben, dann findet die Totalreflexion am Übergang vom optisch dichteren hin zum optisch dünneren Medium, hier dem Medium Luft, statt.

In der Nutzung von Lichtleitern in Fahrzeugen kann es jedoch zu Verschmutzungen des Lichtleiters kommen oder von Kontakten des Lichtleiters mit umgebenden Materialien, die das Leuchtverhalten negativ beeinflussen. Besonders wenn der Lichtleiter zum Hinterleuchten von Baugruppen benutzt werden soll, sind Kontakte mit weiteren Materialien, oft durch Klebestoffe verbunden, nur mit erhöhten Kosten zu vermeiden.

Die FR 2 912 095 A1 offenbart ein Leuchtelement mit einem dekorativen Muster, wobei auf ein Lichtleiterelement eine transparente Schicht aufgebracht ist.

### BESCHREIBUNG DER ERFINDUNG

Es ist eine Aufgabe der Erfindung, eine homogene Beleuchtung einer Baugruppe der Innenausstattung eines Fahrzeuges sicherzustellen, die die vorgenannten Nachteile überwindet.

Die Aufgabe wird mit einer Vorrichtung mit den Merkmalen von Anspruch 1 gelöst. Vorteilhafte Ausgestaltungen der Vorrichtung sind in den weiteren Patentansprüchen aufgeführt.

Die erfindungsgemäße Vorrichtung enthält einen flächigen Lichtleiter, der zumindest teilweise mit einer optischen Lackschicht bedeckt ist. Durch die flächige Ausprägung des Lichtleiters können größere Fläche leichter homogen ausgeleuchtet werden. Die optische Lackschicht schützt den Lichtleiter besonders an den Stellen, an denen eine Verschmutzung zu befürchten ist oder ein Kontakt mit weiteren Baugruppen geplant ist. Die optische Lackschicht hat einen definierten Brechungsindex und kontrolliert damit das Austreten von Lichtstahlen an der Oberfläche des Lichtleiters.

Desweiteren ist die Lackschicht mit einer ersten Klebeschicht zumindest teilweise verbunden, die den Kontakt zu einem Abdeckelement herstellt. Damit wird eine mechanisch sichere Befestigung des Lichtleiters mit dem zu hinterleuchtenden Abdeckelement erreicht, die auf einer flächigen Struktur kaum aufträgt und beliebige Brechungsindizes aufweisen kann. Damit können herkömmliche Kleber für das Abdeckelement verwendet werden.

Gemäß einem Beispiel, das nicht Teil der Erfindung ist, besteht das Abdeckelement aus einem Abstandsgewirke und einer Kaschierung aus Leder, Kunstleder oder Stoff, die mit einer zweiten Klebeschicht untereinander verbunden sind. Das Abstandsgewirke bewirkt einen angenehmen weichen haptischen Eindruck des Abdeckelements, auf das durch einen weiteren Kleber verbunden optisch ansprechende und wenn nötig sehr dünne Kaschierungen aufgebracht werden können. Durch die Lackschicht bestehen bei der Auswahl der Materialien des Abdeckelementes keine Beschränkungen, da sie das optische Reflexionsverhalten nicht beeinflussen können. Alternative kann auch eine Dekorfolie auf den Lichtleiter aufkaschiert werden. Die Folie ist vorzugsweise zumindest teilweise transparent. Dies kann durch die Wahl des Materials der Folie erfolgen oder durch eine Bedrucken einer transparenten Folie mit farbigen Motiven erfolgen. Falls die Bedruckung auf beiden Seiten der Folie erfolgt, entsteht damit zusätzlich eine Tiefenwirkung. Erfindungsgemäß ist die Folie bedruckt und tiefgezogen und kann damit auf die Form der Oberfläche des Lichtleiters vorbereitet werden, wodurch auch dreidimensionale flächige Innenausstattungsteile möglich werden. Die Folie wird durch Kleben auf die den Lichtleiter bedeckende Lackschicht aufgebracht.

Gemäß einer weiteren vorteilhaften Ausgestaltung der Erfindung ist der Lichtleiter spritzgegossen oder spritzgeprägt. Diese Techniken ermöglichen eine einfache und kostengünstige Herstellung des flächigen Lichtleiters.

Weitere Ausgestaltungen der Erfindung sehen vor, dass bei einem Lichtleiter aus Polymethylmethacrylat (PMMA) die Lackschicht eine Brechzahl von kleiner 1,49 aufweist und bei Lichtleiter aus Polycarbonat (PC) die Lackschicht eine Brechzahl von kleiner 1,57 aufweist. Damit stehen durch PMMA und PC zwei günstige Lichtleitermaterialien und ein hinreichend große Auswahl von optischen Lacken zu Verfügung. Gemäß einer bevorzugten Weiterentwicklung der Erfindung ist die Schichtdicke der Lackschicht grösser als 1 pm, um eine sichere Reflexion zu gewährleisten, vorzugsweise zwischen 8 und 12 pm um Fertigungstoleranzen auszugleichen. Zu dicke Lackschichten neigen dazu, brüchig zu werden.

Vorzugsweise ist die optische Lackschicht im Wesentlichen transparent, wobei die Transparenz im sichtbaren Spektralbereich (380-780nm) ein möglichst wellenlängenunabhängiges Absorptionsspektrum aufweisen sollte, um keine Farbverfälschungen des abgestrahlten Lichts zu bewirken.

In einer bevorzugten Ausführung weist die Lackschicht eine wellenlängenunabhängige Dämpfung auf. Somit können auch Lichteffekte benutzt werden, die nicht monochrom sind und eine mehrfarbige oder die Farbe wechselnde Beleuchtung unterstützen.

Gemäß einer weiteren vorteilhaften Ausgestaltung der Erfindung ist der Lichtleiter mit einer Oberflächenstruktur zum gleichmäßigen Auskoppeln von Licht versehen. Damit können auch großflächige Beleuchtungen erreicht werden, bei denen über die Länge des Lichtleiters eine Schwächung der Lichtleistung kompensiert wird und eine weitgehend homogene Lichtstärke gegeben ist. Vorzugsweise besteht die Oberflächenstruktur aus einer Vielzahl von punktförmigen Kerbungen. Diese Kerbungen sind leicht aufzubringen und beeinflussen die mechanische Festigkeit des Lichtleiters kaum. Vorzugsweise nehmen die punktförmigen Kerbungen ausgehend von einer Einkoppelstelle an Größe zu, so dass die größten Kerbungen am Ende des Lichtleiters aus der dann geringeren Lichtintensität eine im Vergleich zum Beginn des Lichtleiters ähnlich große Lichtmenge auskoppeln. Alternativ zu Kerbungen sind auch Streupartikel einsetzbar, um Licht auszukoppeln. Zum Beispiel kann PMMA von Evonik, Herstellerbezeichnung LD12, LD24, LD48, LD96 bzw. "Endlighten" auf den Lichtleiter aufgebracht werden. Bei der Herstellung des Lichtleiters können in den Lichtleiter bereits Strukturelemente, wie Versteifungen und Haken zur späteren Befestigung, angebracht werden. Durch diese einstückige Ausführung des Lichtleiters wird die Montage des Innenausstattungsteils erleichtert.

Für eine kostengünstige Umsetzung werden gemäß einer weiteren vorteilhaften Ausgestaltung der Erfindung Licht-Emittierende Dioden (LED) oder Laserdioden zur Lichteinkopplung in den Lichtleiter benutzt. Vorzugsweise werden mehrere LED benutzt, die entlang einer Kante des Lichtleiters über eine Mehrzahl Einkoppelstellen das Licht der LED in den Lichtleiter einkoppeln. Es können einfarbige oder RGB LED zum Einsatz kommen.

Die Vorrichtung kommt bevorzugt in Fahrzeugtüren, Cockpit oder Mittelkonsolen zum Einsatz, an denen die optischen Effekte ohne Beeinträchtigung der Strassensicht durch den Fahrer gut wahrnehmbar sind.

Darüber hinaus sind weitere Vorteile und Merkmale der vorliegenden Erfindung aus der Beschreibung bevorzugter Ausführungsformen ersichtlich.

Die folgende Beschreibung der bevorzugten Ausführungsformen erfolgt dabei unter Bezugnahme auf die begleitenden Zeichnungen.

### KURZE BESCHREIBUNG DER FIGUREN

Figur 1 zeigt schematisch eine Draufsicht eines flächigen Lichtleiters mit Oberflächenstruktur und Einkoppelstellen.
Figur 2 zeigt schematisch einen Schnitt durch eine Vorrichtung mit Lichtleiter und Abdeckteil.
Figur 3 zeigt schematisch einen Schichtenaufbau einer Vorrichtung, die nicht Teil der Erfindung ist.
Figur 4 zeigt schematisch eine Innenausstattung eines Fahrzeugs mit der angebrachten Vorrichtung zur Beleuchtung, die nicht Teil der Erfindung ist.
Figur 5 zeigt schematisch eine Baugruppe mit Beleuchtung, die nicht Teil der Erfindung ist.
Figur 6 zeigt ein Innenausstattungsteil mit Dekorfolie, gemäß der Erfindung.
Figur 7 zeigt ein Verfahren zur Herstellung der Vorrichtung zur Beleuchtung, das nicht Teil der Erfindung ist.

### AUSFÜHRUNGSBEISPIEL

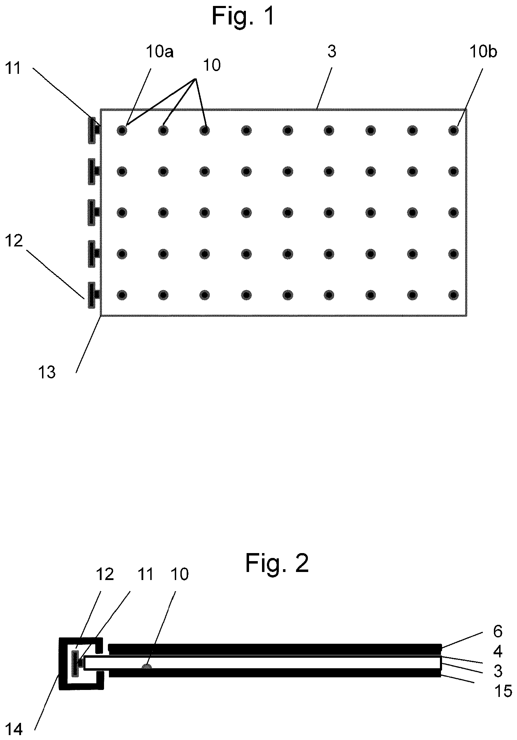

Figur 1 zeigt schematisch einen flächigen Lichtleiter 3 für die Hinterleuchtung eines Türmittelfeldes von der Größe 500 mm x 200 mm. Zum Einkoppeln von Licht sind an einer Kante 13 fünf Licht-Emittierenden Dioden (Leuchtdioden, LED) 12 vorgesehen, die über Einkoppelstellen 11 in der Farbe veränderbares Licht einkoppeln. Die konkrete Anzahl von LED 12 und Einkoppelstellen 11 hängt von der Breite des Lichtleiters 3, der gewünschten maximalen Leuchtstärke und der Leuchtstärke der einzelnen LED 12 ab und kann entsprechend dimensioniert werden.

Der Lichtleiter 3 ist oberflächenbehandelt, um eine gleichmäßige und gerichtete Auskoppelung des Lichtes aus dem Lichtleiter 3 zu gewährleisten. In Richtung der Auskoppelung des Lichtes weist die Oberfläche Einkerbungen 10 auf, die von der Einkopplungsstelle an der Kante 13 zum Beginn des Lichtleiters 3 in einer Linie bis hin zum Abschluss des Lichtleiters 3 angeordnet sind. Dabei hat in dieser Aufreihung die erste Einkerbung 10a einen kleineren Durchmesser als die letzte Einkerbung 10b. Es sind hier jedoch auch andere Mittel einsetzbar, den relativen Anteil des ausgekoppelten Lichtes am Gesamtlicht, das die Auskoppelstelle passiert, so einzustellen, dass der Anteil zu Beginn des Lichtleiters 3 klein und zum Ende des Lichtleiters 3 groß ist.

Figur 2 zeigt schematisch den Querschnitt der Vorrichtung mit dem Lichtleiter 3, in den über die Einkopplungsstelle 11 in einem Gehäuse 14 befindlichen RGB LED 12 Licht eingekoppelt wird. Auf dem Lichtleiter 3 ist ganzflächig eine optische Lackschicht 4 aufgebracht, auf der ein Abdeckelement 6 befestigt ist. Auf der dem Abdeckelement 6 abgewandten Seite, also gegenüber der Abstrahlungsrichtung des Lichtes, ist die Einkerbung 10 derart eingebracht,, dass eine vom Durchmesser der Einkerbung 10 abhängige Lichtmenge ausgekoppelt wird und in Richtung Abdeckelement 6 abgestrahlt wird.

Auf der gegenüberliegenden Seite des Lichtleiters 3 ist eine Reflexionsschicht 15 angebracht. Die Reflexionsschicht 15 wirft an der die Auskopplungsstelle bildenden Einkerbung 10 in Richtung der Reflexionsschicht 15 gebrochenes Licht zurück zur Seite der Lichtauskopplung. Alternativ kann die Reflexionsschicht 15 auch durch einen optischen Lack gebildet werden, wobei die Reflexionswirkung eine geringere ist.

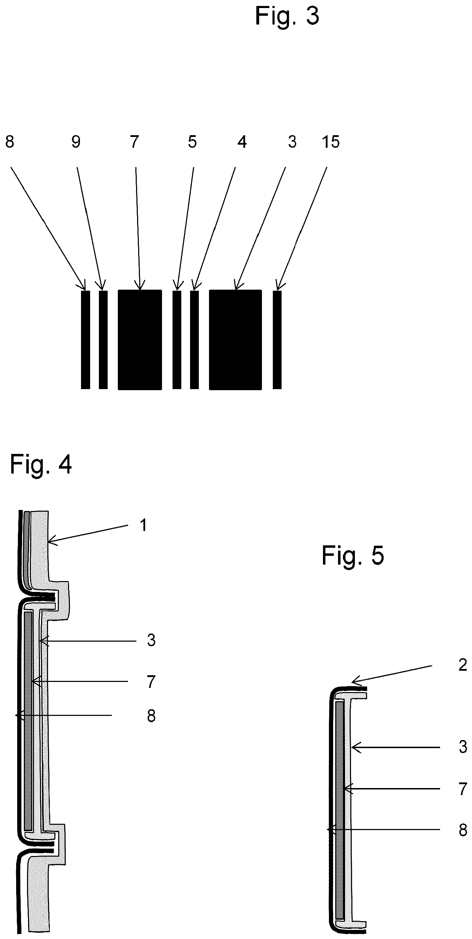

Figur 3 zeigt einen schematischen Schichtenaufbau, der nicht Teil der Erfindung ist.

Die Darstellung ist aufgesprengt, es bestehen keine Abstände zwischen den Schichten 8, 9, 7, 5, 4, 3, 15. Der Lichtleiter 3 wird auf der der Lichtauskopplung abgewandten Seite von einer Reflexionsschicht 15 bedeckt, währenddessen auf der Seite der Lichtauskopplung eine aus einem optischer Lack bestehende Lackschicht 4 aufgebracht ist. Die Schichtdicke des Lichtleiters 3 ist etwa 2 mm, die des optischen Lacks 10 pm. Die Lackschicht 4 muss zumindest 1 pm Dicke aufweisen, um eine ausreichende Reflexion zu gewährleisten, aus Verfahrens- und Toleranzgründen sind Schichtdicken von 8 - 12 µm vorteilhaft.

Der Brechungsindex der Lackschicht 4 ist auf den Lichtleiter 3 abgestimmt und muss kleiner sein, als der des Kunststoffs, aus dem der Lichtleiter 3 besteht. Wird Polymethylmethacrylat PMMA verwendet sollte die Brechzahl der Lackschicht 4 kleiner als 1,49 liegen. Wird Polycarbonat PC mit einer Brechzahl von ca. 1,57 als Lichtleiter 3 verwendet sollte die Brechzahl der Lackschicht 4 entsprechend kleiner als die konkrete Brechzahl des PC, also im Bereich bis 1,56 sein.

Die Lackschicht 4 bedeckt den Lichtleiter 3 auf der gesamten Oberfläche, inklusive der Schmalseiten (dies ist nicht unbedingt notwendig), jedoch nicht auf der Seite der Reflexionsschicht 15. Falls eine Reflexionsschicht 15 als Folie aufgeklebt werden soll, kann jedoch auch diese Seite lackiert werden. Alternativ bedeckt die Lackschicht 4 nur die Stellen des Lichtleiters 3, die sensibel für Verschmutzungen sind oder zur Befestigung des aus einem Abstandsgewirke 7 und einer Kaschierung 8 bestehenden Abdeckelements 6 benötigt werden. Das Abstandsgewirke 7 hat eine Dicke von wenigen Millimetern, um eine weiche, eindrückbare Oberfläche des Abdeckteils 6 zu erzeugen. Es ist auch ein Aufbau ohne Abstandsgewirke 7, d.h. hartkaschiert möglich. Die übrigen Schichtdicken sind wesentlich kleiner.

Die Verbindung zwischen Lackschicht 4 und Abstandsgewirke 7 wird durch eine Klebeschicht 5 bewirkt. Eine zweite Klebeschicht 9 verbindet Abstandsgewirke 7 und Kaschierschicht 8. Für eine robuste und Lufteinschlüsse vermeidende Verbindung werden die Klebeschichten 5 und 9 nahezu auf die gesamte Fläche der Schichten 4, 7 und 8 aufgebracht. Als Kleber eignet sich der Alexit-HighGloss-Clearcoat 460-13 der Firma Mankiewicz.

Figur 4 zeigt eine Innenausstattung 1 eines Fahrzeugs mit der angebrachten Vorrichtung zur Beleuchtung, die nicht Teil der Erfindung ist. Der Lichtleiter 3 hat eine T-Struktur, wobei die orthogonal abstehenden Enden an den Schmalseiten des Lichtleiters 3 zum Festklemmen an der Innenausstattung 1 dienen und die Baugruppe 2 eines Kraftfahrzeugs hinterleuchtet. Durch Lackschicht und Klebeschicht getrennt (beide nicht dargestellt) schließt sich das Abstandgewirke 7 an, das wiederum fest durch eine nicht dargestellte zweite Klebeschicht mit der Kaschierschicht 8 verbunden ist. Der Lichtleiter 3 ist an den an den Schmalseiten angeordneten T-Enden leicht abgerundet, sodass diese Enden von der Kaschierschicht 8 umgeben werden können und sich die Vorrichtung ohne Sicht auf den Lichtleiter 3 in die Innenausstattung 1 einclipsen läßt. Die Baugruppe 2 ist ein Türmittelfeld, siehe Fig. 5. Die Baugruppe 2 kann ohne Zusatzwerkzeug in die Fahrzeugtür eingesetzt werden. Der Lichtleiter 3 ist in Figur 4 und 5 eben dargestellt. Es ist jedoch ebenso möglich für die Formung der Innenausstattung des Fahrzeugs gewünschte Konturen zu erzeugen, d.h. der Lichtleiter 3 kann alternativ stärker gebogen sein und eine dreidimensionale Fläche bilden.

Figur 5 zeigt dieselbe Vorrichtung vor dem Einbringen in die Baugruppe 2. Zum Innenraum des Fahrzeuges hin ist die Vorrichtung mit der Kaschierschicht 8 aus Leder oder Stoff bedeckt, so dass andere Materialien nicht sichtbar sind. Damit wird eine optisch ansprechende Oberfläche geschaffen. Die durch das darunterliegende Abstandgewirke 7 haptisch verbesserte Oberfläche ist zudem weich und elastisch eindrückbar. Die Vorrichtung kann leicht und ohne größeren Aufwand nachträglich in die Innenausstattung 1 eingebracht werden, so dass ein Nachrüsten mit einem hinterleuchteten Abdeckelement möglich wird.

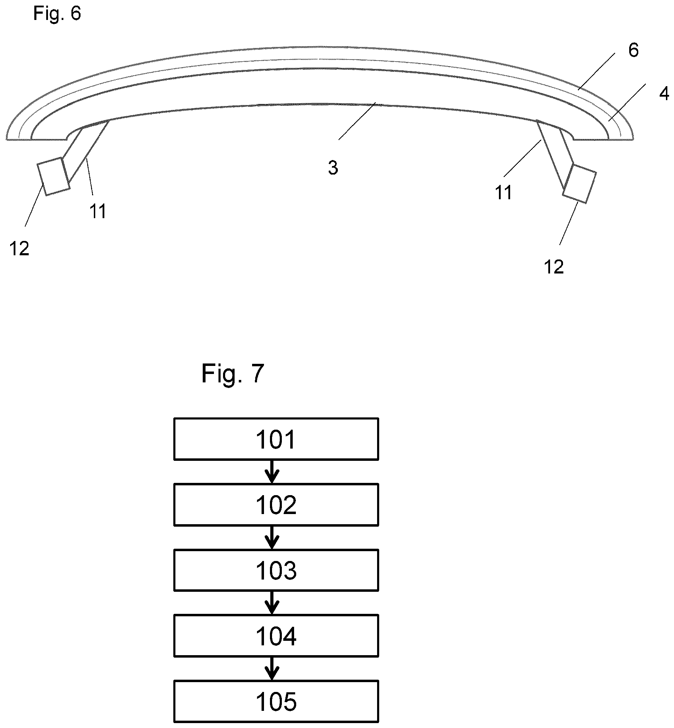

Figur 6 zeigt eine erfindungsgemäße Ausführungsform der Vorrichtung, die aus einem dreidimensionalen flächigen Lichtleiter 3 besteht, an dem zusätzlich Verstärkungen und Halteelemente angebracht sind (nicht dargestellt). Die Einkoppelung des Lichts erfolgt an zwei Einkopplungsstellen 11, die als Rampen in die Oberfläche des Lichtleiters nahe der Biegungen eingebracht sind. An diese Einkopplungsstellen 11 sind jeweils RGB LED 12 befestigt, die Licht in den Lichtleiter 3 in einem Winkel einkoppeln, der in Wechselwirkung mit der auf den Lichtleiter aufgebrachten optischen Lackschicht 4 zur Reflexion an der Berührungsfläche von Lichtleiter 3 zu optischer Lackschicht 4 führen. Auf die optische Lackschicht ist eine tiefgezogene, bedruckte Folie 6 von ca. 0,2 bis 0,3 mm Dicke aufgeklebt, die der Form des Lichtleiters 3 folgt. Die Folie 6 besteht aus transparentem Polycarbonat PC oder Polymethylmethacrylat PMMA. Sie kann auch eine Dicke von bis zu 1 mm haben und auch auf der der optischen Lackschicht 4 zugewandten Seite bedruckt sein, damit wird ein Tiefenwirkung erzielt.

Figur 7 zeigt ein Verfahren zur Herstellung einer Vorrichtung, das nicht Teil der Erfindung ist. In einem ersten Schritt 101 wird der flächige Lichtleiter 3 mittels Spritzguss oder Spritzprägen gefertigt. Nach dem Austrocknen wird in einem zweiten Schritt 102 die Oberfläche des Lichtleiters 3 mit einem optischen Lack 4 mittels Sprühen lackiert, der sodann austrocknet. In einem dritten Schritt 103 wird sodann ein Kleber 5 auf den optischen Lack 4 aufgesprüht und das Abstandsgewirke 7 aufgebracht. In einem vierten Schritt 104 wird anschließend ein zweiter Kleber 9 auf das Abstandgewirke 7 aufgesprüht und das Leder als Kaschierschicht 8 aufgebracht. In einem fünften Schritt 106 werden dann die LED 12 auf die Einkoppelstellen 11 aufgesteckt.

## Patentansprüche

1. Vorrichtung zur Beleuchtung einer Baugruppe (2) einer Innenausstattung (1) eines Fahrzeugs,
mit einem flächigen Lichtleiter (3),
mit einer den Lichtleiter (3) zumindest teilweise abdeckenden optischen Lackschicht (4), die einen definierten, das Austreten von Lichtstahlen an der Oberfläche des Lichtleiters (3) kontrollierenden Brechungsindex aufweist,
mit einer die Lackschicht (4) zumindest teilweise benetzenden ersten Klebeschicht (5),
mit zumindest einem durch die Klebeschicht (5) mit der Lackschicht (4) verbundenen Abdeckelement (6), wobei das Abdeckelement (6) aus einer Folie besteht, die tiefgezogen und bedruckt ist.

2. Vorrichtung nach einem der vorherigen Ansprüche, **dadurch gekennzeichnet, dass** der Lichtleiter (3) spritzgegossen oder spritzgeprägt ist.

3. Vorrichtung nach einem der vorherigen Ansprüche, **dadurch gekennzeichnet, dass** der Lichtleiter (3) aus Polymethylmethacrylat besteht und die Lackschicht (4) eine Brechzahl von kleiner 1,49 aufweist.

4. Vorrichtung nach einem der vorherigen Ansprüche, **dadurch gekennzeichnet, dass** der Lichtleiter (3) aus Polycarbonat besteht und die Lackschicht (4) eine Brechzahl von kleiner 1,57 aufweist.

5. Vorrichtung nach einem der vorherigen Ansprüche, **dadurch gekennzeichnet, dass** die Lackschicht (4) eine Dicke von > 1 µm, vorzugsweise zwischen 8 und 12 µm hat.

6. Vorrichtung nach einem der vorherigen Ansprüche, gekennzeichnet, dass die Lackschicht (4) im sichtbaren Spektralbereich im Wesentlichen transparent ist.

7. Vorrichtung nach einem der vorherigen Ansprüche, gekennzeichnet, dass die Lackschicht (4) eine wellenlängenunabhängige Dämpfung aufweist.

8. Vorrichtung nach einem der vorherigen Ansprüche, **dadurch gekennzeichnet, dass** der Lichtleiter (3) mit einer Oberflächenstruktur (10) zum gleichmäßigen Auskoppeln von Licht versehen ist.

9. Vorrichtung nach Anspruch 8, **dadurch gekennzeichnet, dass** die Oberflächenstruktur (10) aus einer Vielzahl von punktförmigen Kerbungen (10a, 10b) oder Streupartikeln (10a, 10b) besteht.

10. Vorrichtung nach Anspruch 9, **dadurch gekennzeichnet, dass** von einer Einkoppelstelle (11) abgehend die punktförmigen Kerbungen (10a, 10b) an Größe zunehmen.

11. Vorrichtung nach einem der Ansprüche 1 bis 9, **dadurch gekennzeichnet, dass** eine Lichteinkopplung in den Lichtleiter mittels LED (12) erfolgt.

12. Vorrichtung nach Anspruch 8, **dadurch gekennzeichnet, dass** entlang einer Kante (13) des Lichtleiters (3) eine Mehrzahl Einkoppelstellen (11) angebracht sind, die mit jeweils zumindest einer LED (12) gekoppelt sind.

13. Vorrichtung nach einem der vorherigen Ansprüche, **dadurch gekennzeichnet, dass** der Lichtleiter (3) gebogen ist und eine dreidimensionale Fläche bildet, die die Kontur der Innenausstattung (1) des Fahrzeugs vorgibt.

14. Vorrichtung nach einem der vorherigen Ansprüche, **dadurch gekennzeichnet, dass** die Innenausstattung (1) eine Fahrzeugtür, ein Cockpit oder eine Mittelkonsole ist.

## Claims

1. Apparatus for illuminating an assembly (2) of an interior fitting (1) of the vehicle,
having a two-dimensional light guide (3),
having an optical varnish layer (4), which at least partially covers the light guide (3) and has a defined refractive index controlling the emergence of light beams at the surface of the light guide (3),
having a first adhesive layer (5) at least partially wetting the varnish layer (4),
having at least one covering element (6), which is connected to the varnish layer (4) by way of the adhesive layer (5), wherein the covering element (6) consists of a film that is deep-drawn and printed.

2. Apparatus according to the preceding claim, **characterized in that** the light guide (3) is injection moulded or injection stamped.

3. Apparatus according to either of the preceding claims, **characterized in that** the light guide (3) consists of polymethyl methacrylate and the varnish layer (4) has a refractive index of less than 1.49.

4. Apparatus according to one of the preceding claims, **characterized in that** the light guide (3) consists of polycarbonate and the varnish layer (4) has a refractive index of less than 1.57.

5. Apparatus according to one of the preceding claims, **characterized in that** the varnish layer (4) has a thickness of > 1 µm, preferably between 8 and 12 µm.

6. Apparatus according to one of the preceding claims, **characterized in that** the varnish layer (4) is substantially transparent in the visible spectral range.

7. Apparatus according to one of the preceding claims, **characterized in that** the varnish layer (4) exhibits wavelength-independent attenuation.

8. Apparatus according to one of the preceding claims, **characterized in that** the light guide (3) is provided with a surface structure (10) for uniformly coupling out light.

9. Apparatus according to Claim 8, **characterized in that** the surface structure (10) consists of a multiplicity of point-type notches (10a, 10b) or scattering particles (10a, 10b).

10. Apparatus according to Claim 9, **characterized in that** the point-type notches (10a, 10b) increase in size starting from a coupling-in location (11).

11. Apparatus according to one of Claims 1 to 9, **characterized in that** light is coupled into the light guide by means of LEDs (12).

12. Apparatus according to Claim 8, **characterized in that** a plurality of coupling-in locations (11), which are each coupled to at least one LED (12), are disposed along an edge (13) of the light guide (3).

13. Apparatus according to one of the preceding claims, **characterized in that** the light guide (3) is curved and forms a three-dimensional surface that defines the contour of the interior fitting (1) of the vehicle.

14. Apparatus according to one of the preceding claims, **characterized in that** the interior fitting (1) is a vehicle door, a cockpit or a centre console.

## Revendications

1. Dispositif d'éclairage d'un ensemble (2) d'aménagement intérieur (1) d'un véhicule, le dispositif comprenant
un guide de lumière (3) sensiblement bidimensionnel, une couche de peinture optique (4) qui recouvre au moins partiellement le guide de lumière (3) et qui présente un indice de réfraction défini qui contrôle la sortie de faisceaux lumineux au niveau de la surface du guide de lumière (3),
une première couche d'adhésif (5) mouillant au moins partiellement la couche de peinture (4),
au moins un élément de recouvrement (6) relié à la couche de peinture (4) par la couche d'adhésif (5), l'élément de recouvrement (6) comprenant une feuille emboutie et imprimée.

2. Dispositif selon l'une des revendications précédentes, **caractérisé en ce que** le guide de lumière (3) est moulé par injection ou estampé par injection.

3. Dispositif selon l'une des revendications précédentes, **caractérisé en ce que** le guide de lumière (3) est en polyméthacrylate de méthyle et la couche de peinture (4) a un indice de réfraction inférieur à 1,49.

4. Dispositif selon l'une des revendications précédentes, **caractérisé en ce que** le guide de lumière (3) est en polycarbonate et la couche de peinture (4) a un indice de réfraction inférieur à 1,57.

5. Dispositif selon l'une des revendications précédentes, **caractérisé en ce que** la couche de peinture (4) a une épaisseur > 1 µm, de préférence entre 8 et 12 µm.

6. Dispositif selon l'une des revendications précédentes, **caractérisé en ce que** la couche de peinture (4) est sensiblement transparente dans le domaine spectral visible.

7. Dispositif selon l'une des revendications précédentes, **caractérisé en ce que** la couche de peinture (4) présente une atténuation indépendante de la longueur d'onde.

8. Dispositif selon l'une des revendications précédentes, **caractérisé en ce que** le guide de lumière (3) est pourvu d'une structure de surface (10) destinée à la sortie uniforme de lumière par couplage.

9. Dispositif selon la revendication 8, **caractérisé en ce que** la structure de surface (10) est constituée d'une multiplicité d'encoches ponctuelles (10a, 10b) ou de particules diffusantes (10a, 10b).

10. Dispositif selon la revendication 9, **caractérisé en ce que** les encoches ponctuelles (10a, 10b) augmentent de taille à partir d'un point d'injection par couplage (11).

11. Dispositif selon l'une des revendications 1 à 9, **caractérisé en ce que** l'injection de lumière par couplage dans le guide de lumière est effectuée au moyen de LED (12).

12. Dispositif selon la revendication 8, **caractérisé en ce qu'**une pluralité de points d'injection par couplage (11), qui sont couplés chacun à au moins une LED (12), sont montés le long d'un bord (13) du guide de lumière (3).

13. Dispositif selon l'une des revendications précédentes, **caractérisé en ce que** le guide de lumière (3) est courbe et forme une surface tridimensionnelle qui définit le contour de l'équipement intérieur (1) du véhicule.

14. Dispositif selon l'une des revendications précédentes, **caractérisé en ce que** l'équipement intérieur (1) est une porte de véhicule, un habitacle ou une console centrale.
